(19) Europäisches Patentamt

European Patent Office

Office européen des brevets

(11) Veröffentlichungsnummer : **0 360 976 B1**

# (12) EUROPÄISCHE PATENTSCHRIFT

(45) Veröffentlichungstag der Patentschrift :
**22.07.92 Patentblatt 92/30**

(51) Int. Cl.⁵ : **G01B 5/03,** G01B 21/04

(21) Anmeldenummer : **89109552.3**

(22) Anmeldetag : **26.05.89**

(54) Koordinatenmessgerät.

(30) Priorität : **07.07.88 DE 3823042**

(43) Veröffentlichungstag der Anmeldung :
**04.04.90 Patentblatt 90/14**

(45) Bekanntmachung des Hinweises auf die
Patenterteilung :
**22.07.92 Patentblatt 92/30**

(84) Benannte Vertragsstaaten :
**DE FR GB IT SE**

(56) Entgegenhaltungen :
**CH-A- 467 992**

(73) Patentinhaber : **Firma Carl Zeiss**
**W-7920 Heidenheim (Brenz) (DE)**
㊓ **DE FR IT SE**

Patentinhaber : **CARL ZEISS-STIFTUNG**
**HANDELND ALS CARL ZEISS**
**W-7920 Heidenheim (Brenz) (DE)**
㊓ **GB**

(72) Erfinder : **Breyer, Karl-Hermann, Dr.**
**Hans-Holbeinstrasse 51**
**W-7920 Heidenheim (DE)**
Erfinder : **Starp, Franz**
**Mittlere Steige 36**
**W-7547 Wildbad (DE)**

**Beschreibung**

Die Erfindung betrifft ein Koordinatenmeßgerät mit einem vertikal verschiebbaren Meßschlitten, einem Antrieb für den Meßschlitten und einer Einrichtung für den Gewichtsausgleich des Meßschlittens.

Bisher wurde der Gewichtsausgleich für die sogenannte Z-Achse von Koordinatenmeßgeräten, d.h. den vertikal geführten Meßschlitten, überwiegend durch Gegengewichte vorgenommen. Koordinatenmeßgeräte mit dieser Form des Gewichtsausgleichs sind beispielsweise in der DE-PS 26 13 451 und der DE-PS 29 43 431 beschrieben. Nachteilig hieran ist jedoch, daß ein solches Gegengewicht die Masse des verschiebbaren Teils verdoppelt. Die Maschine muß dann steifer gebaut werden, um Durchbiegungen klein zu halten, denen die waagerechten Führungen des Koordinatenmeßgerätes unterliegen. Außerdem sind für die Beschleunigung der Meßschlitten höhere Kräfte erforderlich. Für diese Art der Gewichtskompensation ist außerdem nur die vertikale Einbaulage möglich.

Es ist auch schon vorgeschlagen worden, anstelle des Gegengewichtes Pneumatikzylinder für den Gewichtsausgleich vorzusehen. Entsprechende Koordinatenmeßgeräte sind beispielsweise in der US-PS 42 07 680, der DE-OS 31 19 228 sowie dem DE-GM 86 09 423 beschrieben. Zwar hat diese Lösung den Vorteil einer geringeren Masse und läßt beliebige Einbaulagen zu, sie erfordert jedoch einen konstruktiv hohen Aufwand. Denn es wird ein Druckmittelaggregat, gegebenenfalls ein Ausgleichsgefäß für eine relativ große Luftmenge sowie ein pneumatischer Regelkreis benötigt, um den Druck im Zylinder konstant zu halten.

Schließlich ist es noch aus der US-PS 38 18 596 bekannt, den Gewichtsausgleich durch eine bezüglich der übertragenen Kraft einstellbare Kupplung zwischen einem dauernd drehenden Antriebsmotor und dem vertikal geführten Teil vorzunehmen. Derartige Lösungen, bei denen der Antriebsmotor selbst das Gewicht des geführten Teils vollständig aufnimmt oder sogar überkompensiert, bilden eine störende Wärmequelle.

Es ist weiterhin z.B. aus der CH-A-467 992 bekannt, zur Gewichtskompensation von vertikal verschiebbaren Maschinenteilen sogenannte Federmotore einzusetzen. Diese bestehen aus einer nach Art eines Uhrwerks aufgewickelten Spiralfeder. Um die relativ große Variation der Federkraft im Arbeitsbereich des Federmotors auszugleichen, wird das geführte Teil in der Regel über eine sogenannte archimedische Spirale an den Federmotor angekoppelt. Auch diese Lösung ist relativ aufwendig. Zudem besitzen derartige Federmotore eine geringe Laufruhe, da nichtlineare Schwankungen der Federkraft im Arbeitsbereich des Federmotors auftreten.

Es ist die Aufgabe der vorliegenden Erfindung, eine Einrichtung für den Gewichtsausgleich für die vertikal verschiebbaren Schlitten von Koordinatenmeßgeräten zu schaffen, der die vorstehend genannten Nachteile weitgehend vermeidet. Insbesondere soll eine hohe Laufruhe bei möglichst geringem Aufwand gewährleistet sein.

Diese Aufgabe wird bei einem Koordinatenmeßgerät der eingangs genannten Art dadurch gelöst, daß
– die Einrichtung für den Gewichtsausgleich eine Schraubenfeder enthält, deren Arbeitsbereich klein gegenüber ihrer Länge im unbelasteten Zustand ist,
– zwischen die Feder und dem Meßschlitten ein untersetzendes Bandgetriebe geschaltet ist und
– der Antrieb und die Feder jeweils mit einer Rolle des Bandgetriebes verbunden sind.

Infolge der Verwendung der Schraubenfeder für den Gewichtsausgleich ergibt sich eine hohe Laufruhe für das geführte Teil. Das untersetzende Getriebe ermöglicht es, den Arbeitsbereich der Feder klein gegen die Länge der Feder im unbelasteten Zustand zu halten, so daß die Variation der Federkraft im Arbeitsbereich nur gering ist. Bei kurzen Verfahrwegen für das vertikal verschiebliche Teil kann die resultierende Restkraft daher leicht durch den Antriebsmotor selbst in Verbindung mit dem Lageregelkreis für die Z-Achse ausgeglichen werden. Da hierbei nur Restkräfte kompensiert werden, fällt die entstehende Wärmeentwicklung nicht ins Gewicht.

Für längere Verfahrwege ist es zweckmäßig, eine exzentrisch gelagerte Rolle zur Kompensation der Variation der Federkraft im Arbeitsbereich der Feder vorzusehen.

Die Spiralfeder kann entweder als Druckfeder oder als Zugfeder ausgeführt werden.

Wenn die Spiralfeder für den Gewichtsausgleich eine Druckfeder ist, wird sie zweckmäßig mit durchgehender Zugstange ausgebildet. Da sie im zusammengedrückten Zustand in einem Arbeitsbereich betrieben wird, der klein gegen ihre Gesamtlänge ist, um die Variation der Federkraft bezogen auf die Gesamtkraft der Feder gering zu halten, ergibt sich ein im Vergleich zu einer Zugfeder stark reduzierter Einbauraum und damit eine kompakte Bauform für den gesamten Gewichtsausgleich. Außerdem zeigt eine derart kurz zusammengedrückte Feder ein bedeutend günstigeres Schwingungsverhalten als eine Zugfeder. Schließlich ist bei der Druckfeder keine Sicherung gegen Federbruch erforderlich, da die Feder in einem solchen Falle lediglich um eine Windung nachgibt. Eine Zugfeder hingegen besitzt andere Vorteile. So sind beispielsweise keine besonderen Vorkehrungen gegen ein seitliches Ausknicken zu treffen.

Nachfolgend sind Ausführungsbeispiele der Erfindung anhand der Figuren 1-8 der beigefügten Zeichnungen beschrieben.

Figur 1 Ist eine perspektivische Darstellung eines Koordinatenmeßgerätes vom Auslegertyp mit einer Einrichtung für den Gewichtsausgleich der vertikal verschieblichen Pinole;

Figur 2 zeigt den den Gewichtsausgleich enthaltenden Teil der Maschine im vergrößerten Maßstabe in der Seitenansicht;

Figur 3 zeigt ein leicht modifiziertes, zweites Ausführungsbeispiel für den Gewichtsausgleich in im Vergleich zu Figur 2 nochmals vergrößertem Maßstab;

Figur 4a und 4b sind Prinzipskizzen zur Verdeutlichung von Arbeitsbereich und Einbaulänge bei einer Zugfeder (4a) und einer Druckfeder (4b);

Figur 5 stellt ein weiteres, gegenüber Figur 2 leicht modifiziertes Ausführungsbeispiel für den Gewichtsausgleich des Koordinatenmeßgerätes dar;

Figur 6 ist die Prinzipskizze des Lageregelkreises für den Motor (17) aus Figur 2;

Figur 7 zeigt ein weiteres modifiziertes Ausführungsbeispiel für den Gewichtsausgleich in Seitenansicht;

Figur 8 ist eine Darstellung des Ausführungsbeispiels nach Figur 7 im Schnitt längs der Linie VIII-VIII in vergrößertem Maßstabe.

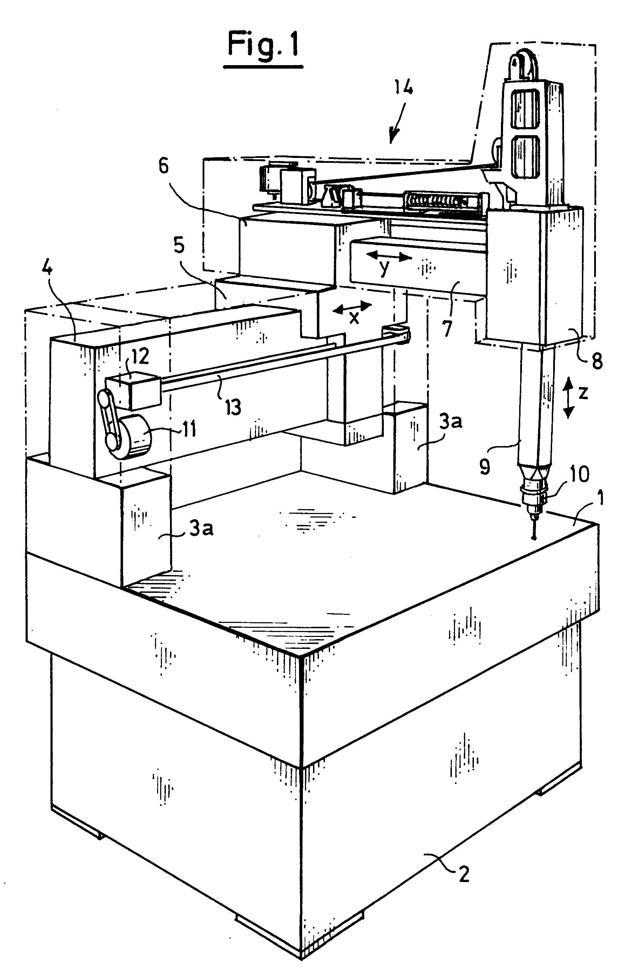

Das in Figur 1 dargestellte Koordinatenmeßgerät vom Auslegertyp besitzt einen Meßtisch (1), beispielsweise aus Granit, der auf einem mit (2) bezeichneten Untergestell ruht. Am hinteren Ende des Meßtisches (1) ist auf zwei Trägern (3a und 3b) ein waagerecht liegender Führungsbalken (4) mit rechteckigem Querschnitt aufgelegt, auf dem der in Richtung des Pfeils X verschiebbare Meßschlitten (5) mittels nicht dargestellter Luftlager gleitet. Dieser Schlitten (5) trägt seinerseits ein Lagergehäuse (6) für einen senkrecht zur Richtung X ebenfalls waagerecht verschiebbaren Ausleger (8). Das Führungselement, an dem der Ausleger (8) befestigt ist, ist mit (7) bezeichnet.

Im Ausleger (8) ist vertikal in Richtung des Pfeils Z verschieblich die Pinole (9) gelagert, die den Tastkopf (10) des Koordinatenmeßgeräts trägt.

Die verschiebbaren Teile des Koordinatenmeßgerätes werden jeweils über Bänder motorisch angetrieben. In der perspektivischen Darstellung nach Figur 1 sind der Antriebsmotor (11), das Getriebe (12) und das Band (13) für die X-Führung zu sehen, der Antrieb für die Y-Achse ist nicht dargestellt, besitzt jedoch den gleichen Aufbau.

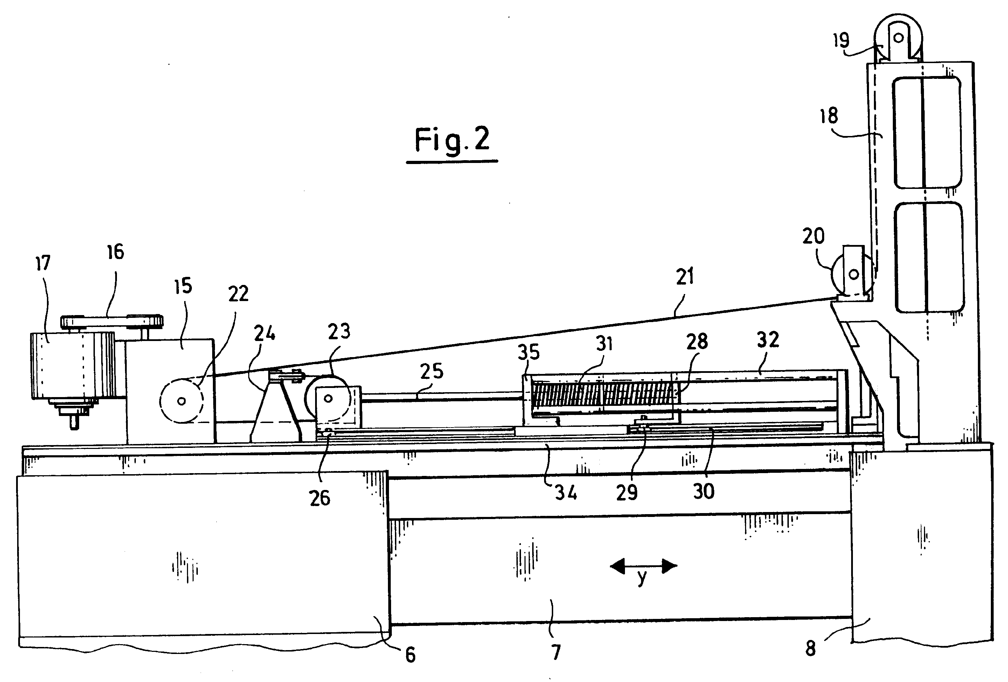

Die Pinole (9) ist an einem Band (21) aufgehängt. Dieses Band (21) ist wie aus der detaillierteren Darstellung nach Figur 2 hervorgeht über zwei Umlenkrollen (19 und 20) gelegt, die von einem Träger (18) auf der Oberseite des Auslegers (8) gehalten werden. Das Band (21) ist weiterhin nach Art eines Flaschenzugs um die Abtriebsrolle (22) der am hinteren Ende des Auslegers angeordneten Antriebseinheit und um eine zweite, bewegliche Rolle (23) gelegt, die mit der Zugstange (25) der für den Gewichtsausgleich verwendeten Feder (31) verbunden ist. Das Ende des Bandes (21) wird von einem Lagerbock (24) gehalten.

Die Antriebseinheit besteht aus einem Elektromotor (17) und einem Winkelgetriebe (15) und einem beide verbindenden Riementrieb (16). Sie ist ebenso wie der Lagerbock (24) und die Führungsschiene (27) der beweglichen Rolle (23) des Flaschenzugs auf einer Tragplatte (34) aufgebaut, die am Ausleger (8) befestigt und zusammen mit diesem in Richtung des Pfeils Y beweglich ist.

Die Zugstange (25) ist durch die Feder (31) hindurchgeführt und trägt an ihrem hinteren Ende eine Druckplatte (28) die ebenfalls in einer Führungsschiene (30) auf der Tragplatte (34) geführt ist.

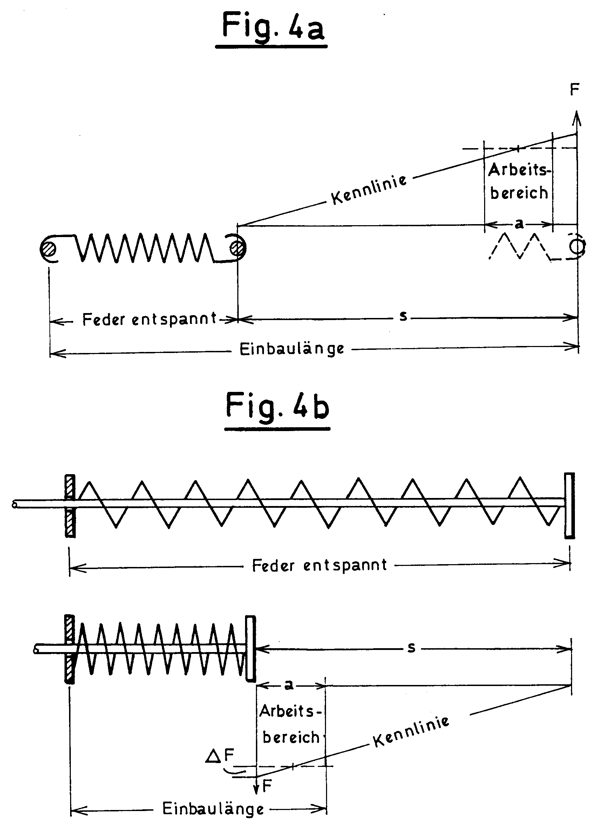

Die Feder (31) ist zwischen dem Druckteller (28) und der Stirnseite (35) eines auf der Tragplatte (34) montierten Federkäfigs (32) eingespannt. Infolge des aus den Rollen (22) und (23) gebildeten Flaschenzuges bewegt sich der Druckteller (28) bei einer vertikalen Verschiebung der Pinole (9) in einem um den Faktor zwei verglichen mit dem Bewegungsbereich der Pinole reduzierten Umfange mit. Die Federkonstante der Druckfeder (31) ist so gewählt, daß sie bei Mittelstellung das Gewicht der Pinole (9) gerade kompensiert. Die an den beiden Enden des Bewegungsbereichs auftretenden Änderungen der Federkraft sind relativ gering, da die Feder wie aus der Darstellung nach Figur 4b ersichtlich im zusammengedrückten Zustand in einem Arbeitsbereich betrieben wird, der im Vergleich zur Länge s der Vorspannung klein ist.

Durch einen Vergleich der Darstellungen nach Figur 4a und Figur 4b wird außerdem deutlich, welche Vorteile die Druckfeder verglichen mit einer gleichartigen Zugfeder für diesen Anwendungsfall besitzt. Die in Figur 4a dargestellte Zugfeder ist in der Ausgangsform sehr kurz und wird auf ein langes Maß in den Arbeitsbereich hinein ausgezogen. Entsprechend ergibt sich eine relativ große Einbaulänge, die oft nicht zur Verfügung steht. Die Druckfeder hingegen ist im entspannten Ausgangszustand zwar sehr lang, wird jedoch auf ein relativ kurzes Maß in den Arbeitsbereich hinein zusammengedrückt. Hierdurch ergibt sich eine geringe Einbaulänge, so daß der gesamte Gewichtsausgleich sehr kompakt gehalten werden kann und über dem Ausleger des in Figur 1 dargestellten Koordinatenmeßgerät Platz findet.

Solange die Kraftänderungen $\Delta F$ im Arbeitsbereich der Feder (31) geringer als die übertragbaren Antriebskräfte des Bandgetriebes und des Riementriebes (16) in der Antriebseinheit sind, brauchen keine zusätzlichen Maßnahmen zur Kompensation dieser Restkräfte $\Delta F$ ergriffen werden. Dies ist bei kleinen Verfahrwegen für die Pinole (9) in der Regel der Fall. Die Restkräfte können dann vom Antriebsmotor (17) selbst aufgenommen werden. Hierfür sorgt der Lageregelkreis für die Z-Achse des Koordinatenmeßgerätes automatisch.

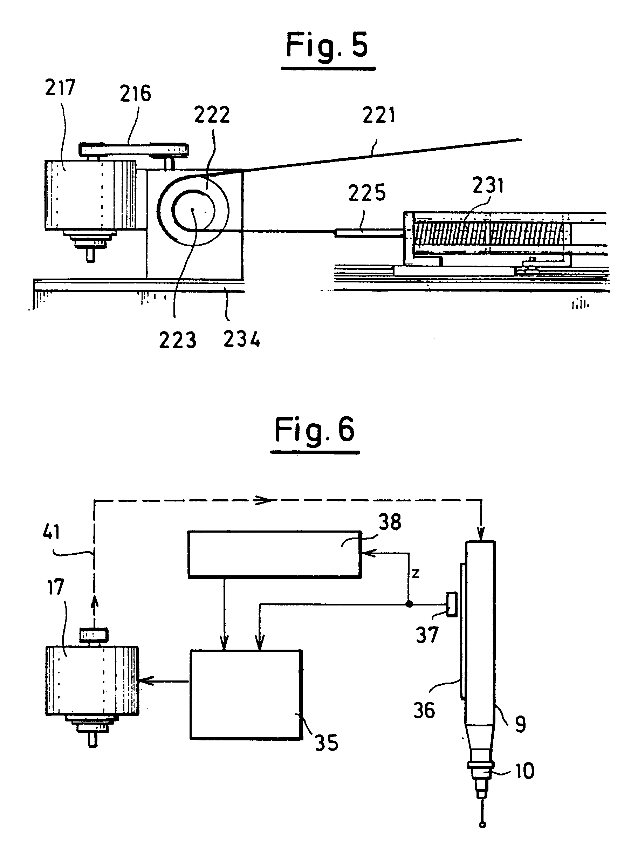

Dieser Lageregelkreis ist in vereinfachter Form in Figur 6 skizziert. Dort ist die getriebliche Verbindung zwischen dem Motor (17) und der Pinole (9) mit (41) bezeichnet. An der Z-Achse ist wie üblich ein Längenmeßsystem bestehend aus einem Maßstab (36) an der Pinole selbst und einem photoelektrischen Geberkopf (37) im Ausleger (8) zugeordnet. Dessen Positionssignale sind einmal dem Steuerrechner (38) des Koordinatenmeßgerätes, und zum anderen der Regelelektronik (35) für den Motor (17) zugeführt. Der damit geschlossene Lageregelkreis beaufschlagt den Motor (17) ständig mit dem Strom, der erforderlich ist, um Restkräfte, d.h. Differenzen zwischen der Gewichtskraft der Pinole (9) und der Druckkraft der Feder (31) auszugleichen.

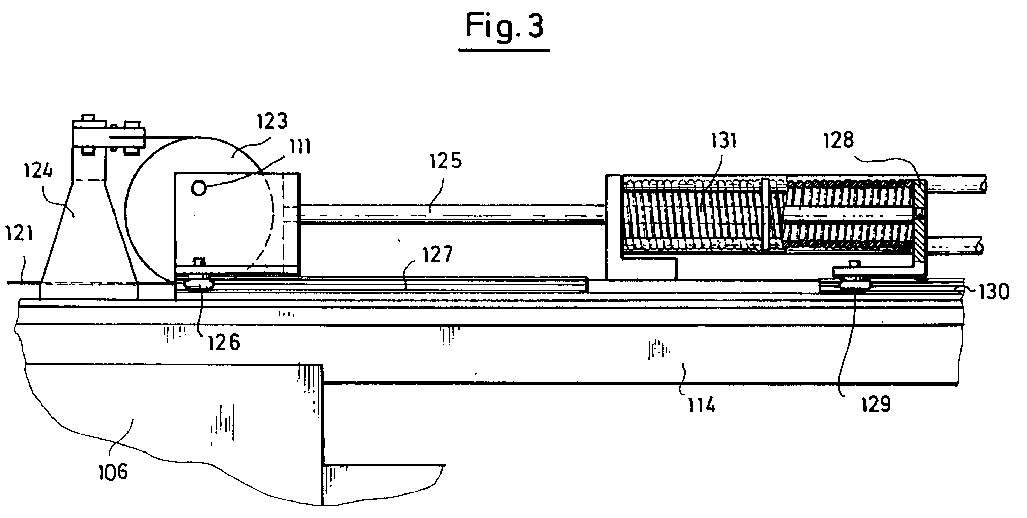

Wenn größere Verfahrwege für die Pinole realisiert werden sollen, können die Restkräfte $\Delta F$ auch mechanisch mit dem in Figur 3 skizzierten Aufbau kompensiert werden. Die Darstellung nach Figur 3 entspricht im wesentlichen der nach Figur 2, wobei gleiche Teile mit einer um hundert höheren Bezugsziffer versehen sind und nicht nochmals erklärt werden.

In der modifizierten Ausführungsform nach Figur 3 ist die Rolle (123) des Flaschenzuges, an der die Zugstange (125) der Druckfeder (133) befestigt ist, exzentrisch um die Achse (111) herum drehbar. Damit ändert sich der durch den Abstand zwischen der Achse (111) und dem Außenumfang der Rolle bestimmte Hebel abhängig von der Drehlage der Rolle (123) bzw. der Länge der Feder (131). Da der Durchmesser der Rolle (123) bei einem Flaschenzuggetriebe nicht in das Untersetzungsverhältnis eingeht, kann durch geeignete Wahl des Durchmessers und der Exzentrizität erreicht werden, daß die auf das Band (121) wirkende Zugkraft der Feder (131) im Arbeitsbereich konstant bleibt.

In Figur 5 ist eine alternative Ausführungsform für das untersetzende Flaschenzuggetriebe nach Figur 2 bzw. 3 dargestellt. Hier treibt der Antriebsmotor (217) über den Riementrieb (216) und das Winkelgetriebe (215) eine Scheibe (222) mit relativ großem Durchmesser an, um die das Antriebsband (221) für die Pinole läuft. Die Feder (231) ist mit ihrer Zugstange (225) an eine zweite Rolle (221) mit kleinerem Durchmesser angebunden. Beide Rollen (221) und (222) sitzen auf der gleichen Welle des Getriebes (215).

Auch bei dieser Ausführungsform kann durch exzentrische Anbringung der Rolle (222) bzw. eine spiralige Ausbildung ihres Außenumfanges erreicht werden, daß die auf das Band (221) wirkende Kraft des Gewichtsausgleiches unabhängig vom Federweg bleibt.

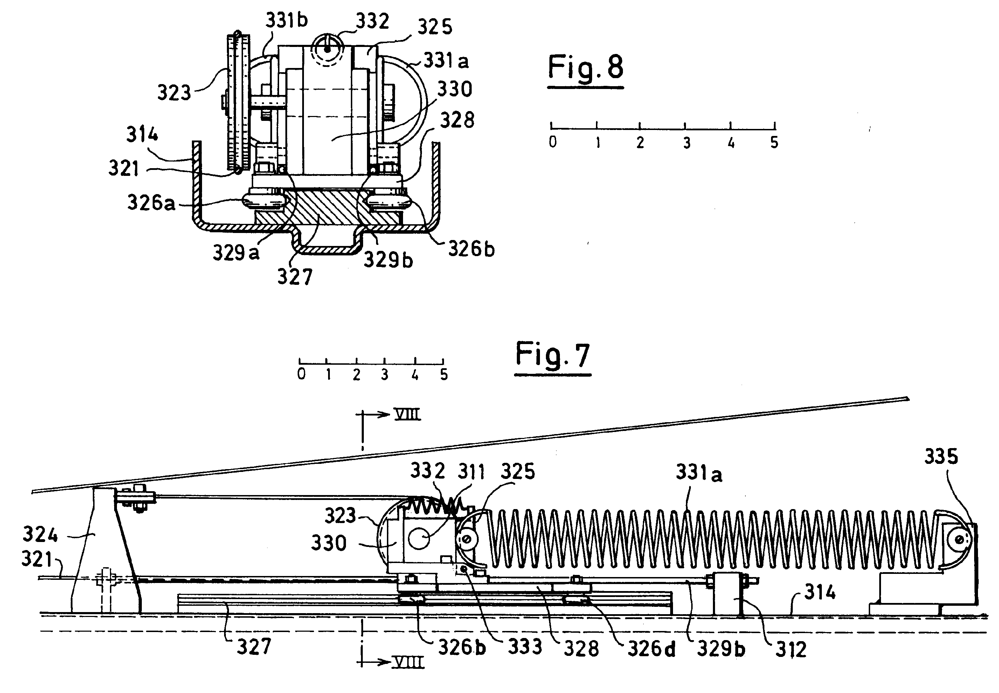

Im Ausführungsbeispiel nach Figur 7 und Figur 8 sind anstelle einer Druckfeder zwei nebeneinander angeordnete Zugfedern (331a und 331b) für den Gewichtsausgleich vorgesehen. Der gesamte Gewichtsausgleich ist auch hier wieder wie in den anderen Ausführungsbeispielen von einem Träger (314) auf der Oberseite des Auslegers des Koordinatenmeßgerätes gehalten.

In der Darstellung nach Figur 7 ist der Lagerbock mit (324) bezeichnet, an dem das Ende des Zugseils (321) befestigt ist. Dieses Zugseil (321) ist wieder nach Art eines Flaschenzugs um eine nicht dargestellte feste Rolle gelegt, die mit dem Antrieb der Pinole verbunden ist, und um eine zweite, bewegliche Rolle (332). Die Rolle (332) ist drehbar in einem Schlitten (328) gelagert, der mittels vier Führungsrollen (326a-d) entlang einer Führungsleiste (327) verschiebbar gelagert ist.

Der Schlitten (328) trägt ein um eine Achse (333) schwenkbares Teil (325), in das zwei nebeneinanderliegende Federn (331a) und (331b) eingehängt sind. Die beiden Federn sind am anderen Ende in einen auf dem Träger (314) montierten Lagerbock (335) eingehängt und werden durch das über das Seil (321) wirkende Gewicht der Pinole des Koordinatenmeßgerätes gespannt.

Der Gewichtsausgleich besitzt weiterhin eine Sicherung gegen Federbruch, die verhindert, daß die Pinole dann ungebremst auf den Tisch des Koordinatenmeßgerätes bzw. auf das zu vermessende Werkstück auffällt. Diese Sicherung besteht aus zwei Stangen (329a) und (329b), die im Lagerbock (324) und in einem zweiten Lagerbock (312) auf dem Träger (314) befestigt sind und durch den Schlitten (328) hindurch unterhalb des schwenkbaren Teils (325) geführt sind. Zur Sicherheitsbremseinrichtung gehört auch eine weitere Feder (332), deren Federkonstante kleiner als die der beiden Federn (331a) und (331b) ist und die versucht das Teil (325) um die Achse (333) in Richtung auf das mit (330) bezeichnete Teil des Schlittens (328) zu ziehen.

Wenn der Fall eintritt, daß eine der beiden Federn (331a) oder (331b) bricht, dann übersteigt die Federkraft der Feder (332) die der verbleibenden Feder des Gewichtsausgleichs und das Teil (325) wird verschwenkt, wobei dessen Unterseite mit stark übersetzter Hebelkraft auf die beiden Bremsstangen (329a) und (329b) drückt. Der Schlitten (328) kommt dabei zum Stillstand.

**Patentansprüche**

1. Koordinatenmeßgerät mit einem vertikal verschiebbaren Meßschlitten, einem Antrieb für den Meßschlitten und einer Einrichtung für den Gewichtsausgleich des Meßschlittens, dadurch gekennzeichnet, daß

# EP 0 360 976 B1

– die Einrichtung für den Gewichtsausgleich eine Schraubenfeder (31) enthält, deren Arbeitsbereich klein gegenüber ihrer Länge im unbelasteten Zustand ist,

– zwischen die Feder (31) und den Meßschlitten (9) ein untersetzendes Bandgetriebe (21-23) geschaltet ist und

– der Antrieb (15-17) und die Feder (31) jeweils mit einer Rolle (22/23) des Bandgetriebes verbunden sind.

2. Koordinatenmeßgerät nach Anspruch 1, dadurch gekennzeichnet, daß die Feder (31) eine Druckfeder ist.

3. Koordinatenmeßgerät nach Anspruch 1, dadurch gekennzeichnet, daß die Feder (331) eine Zugfeder ist.

4. Koordinatenmeßgerät nach Anspruch 1, dadurch gekennzeichnet, daß das Bandgetriebe (21-23) nach Art eines Flaschenzuges ausgebildet ist.

5. Koordinatenmeßgerät nach Anspruch 1, dadurch gekennzeichnet, daß Mittel zur Kompensation der innerhalb des Arbeitsbereichs der Feder (31) auftretenden Variation der Federkraft vorgesehen sind.

6. Koordinatenmeßgerät nach Anspruch 5, dadurch gekennzeichnet, daß die Variation der Federkraft durch eine exzentrische Lagerung einer Rolle (123) des Bandgetriebes kompensiert ist.

7. Koordinatenmeßgerät nach Anspruch 5, dadurch gekennzeichnet, daß die Variation der Federkraft durch den Antriebsmotor (17) selbst kompensiert ist.

8. Koordinatenmeßgerät nach Anspruch 1, dadurch gekennzeichnet, daß das Koordinatenmeßgerät vom Auslegertyp ist, der vertikal verschiebbare Meßschlitten eine Pinole (9) ist, die den Tastkopf (10) trägt und in einem waagerecht verschiebbaren Ausleger (7/8) gelagert ist, und daß die Einrichtung für den Gewichtsausgleich über dem Ausleger (7/8) liegend angeordnet ist.

## Claims

1. A coordinate-measuring instrument having a vertically displaceable measurement slide, a drive for the measurement slide, and a device to compensate for the weight of the measurement slide, characterized by the fact that:

– the device for weight compensation comprises a helical spring (31) having a working range which is small as compared with its length in relaxed condition,

– a stepdown belt transmission (21-23) is interposed between the spring (31) and the measurement slide (9), and

– the drive (15-17) and the spring (31) are each connected to a pulley (22/23) of the belt transmission.

2. A coordinate-measuring instrument according to claim 1, characterized by the fact that the spring (31) is a compression spring.

3. A coordinate-measuring instrument according to claim 1, characterized by the fact that the spring (331) is a tension spring.

4. A coordinate-measuring instrument according to claim 1, characterized by the fact that the belt transmission (21-23) is developed in the manner of a block and tackle.

5. A coordinate-measuring instrument according to claim 1, characterized by the fact that means are provided to compensate for the variation in spring force occurring with the working range of the spring (31).

6. A coordinate-measuring instrument according to claim 5, characterized by the fact that the variation in spring force is compensated for by the eccentric mounting of a pulley (123) of the belt transmission.

7. A coordinate-measuring instrument according to claim 5, characterized by the fact that the variation in the spring force is compensated for by the drive motor (17) itself.

8. A coordinate-measuring instrument according to claim 1, characterized by the fact that the coordinate-measuring instrument is of the cantilever-boom type, that the vertically displaceable measurement slide is a spindle (9) which carries a probe head (10) and is mounted in a horizontally displaceable boom and that the device for compensation for the weight is arranged horizontally above the boom (7).

## Revendications

1. Appareil de mesure de coordonnées comportant un chariot de mesure déplaçable verticalement, un dispositif d'entraînement pour le chariot de mesure et un dispositif d'équilibrage du chariot de mesure, caractérisé en ce que

– le dispositif d'équilibrage contient un ressort hélicoïdal (31), dont la course de travail est faible par rapport à sa longueur à l'état non contraint,

5

– une transmission à bande démultiplicatrice (21-23) est montée entre le ressort (31) et le chariot de mesure (9), et

– le dispositif d'entraînement (15-17) et le ressort (31) sont raccordés respectivement à un rouleau (22/23) de la transmission à bande.

2. Appareil de mesure de coordonnées selon la revendication 1, caractérisé en ce que le ressort (31) est un ressort de pression.

3. Appareil de mesure de coordonnées selon la revendication 1, caractérisé en ce que le ressort (331) est un ressort de traction.

4. Appareil de mesure de coordonnées selon la revendication 1, caractérisé en ce que la transmission à bande (21-23) est agencée à la manière d'un moufle.

5. Appareil de mesure de coordonnées selon la revendication 1, caractérisé en ce qu'il est prévu des moyens pour compenser la variation de la force du ressort, qui apparaît sur la course de travail du ressort (31).

6. Appareil de mesure de coordonnées selon la revendication 5, caractérisé en ce que la variation de la force du ressort est compensée par un montage excentré d'un rouleau (123) de la transmission à bande.

7. Appareil de mesure de coordonnées selon la revendication 5, caractérisé en ce que la variation de la force du ressort est compensée par le moteur d'entraînement (17) lui-même.

8. Appareil de mesure de coordonnées selon la revendication 1, caractérisé en ce que l'appareil de mesure de coordonnées est du type à bras en console, que le chariot de mesure déplaçable verticalement est un manchon (9), qui porte le palpeur (10) et est monté dans un bras en console (7/8) déplaçable horizontalement, et que le dispositif d'équilibrage est disposé horizontalement au-dessus du bras en console (7/8).

# Fig.1

Fig.2

EP 0 360 976 B1

# Fig.3

EP 0 360 976 B1

# Fig. 4a

Kennlinie

Arbeitsbereich

a

Feder entspannt

s

Einbaulänge

# Fig. 4b

Feder entspannt

s

a

Arbeitsbereich

ΔF

Kennlinie

F

Einbaulänge

## Fig. 5

## Fig. 6

Fig. 8

Fig. 7

EP 0 360 976 B1